# EUROPEAN PATENT SPECIFICATION

(11) **EP 1 020 040 B1**
(45) Date of publication and mention of the grant of the patent: **24.10.2007**
(21) Application number: 98944656.2
(22) Date of filing: 01.09.1998
(51) Int. Cl.: H04B 7/00

(54) **METHOD FOR DISPLAYING A MESSAGE WHICH HAS BEEN RECEIVED**
VERFAHREN ZUR ANZEIGE EINER EMPFANGENEN NACHRICHT
PROCEDE PERMETTANT D'AFFICHER UN MESSAGE RECU

(30) Priority: 05.09.1997 US 924261
(43) Date of publication of application: 19.07.2000
(73) Proprietor: MOTOROLA, INC., Schaumburg, IL 60196 (US)
(72) Inventor: BURGAN, John, M., North Palm Beach, FL 33408 (US); LERNER, Kenneth, S., Boca Raton, FL 33498 (US)
(74) Representative: Cross, Rupert Edward Blount
(86) International application number: PCT/US1998/018145
(87) International publication number: WO 1999/013597

(56) References cited:
- US-A- 4 860 247
- US-A- 5 247 700
- US-A- 5 258 751
- US-A- 5 473 143
- US-A- 5 495 517
- US-A- 5 870 682
- US-B1- 6 351 656
- US-S- D 363 281

## Description

### Field of the Invention

This invention relates in general to electronic devices and in particular to communication devices which have a display.

### Background of the Invention

Communication devices such as pagers using present day technology have the capability of giving an alert if a priority or emergency message is received by the pager. For example, a paging feature such as, Priority Override Page, will prioritize an incoming priority page by informing an individual with an audible alert, regardless if his/her pager is set on vibrate or silent mode of operation. For a specific and illustrative example of pagers that provide such priority page override capability, one may refer to United States Patent No. 4,438,433, granted to Smoot, et al., entitled "Multiaddress Pager with a Call Storage and Priority Page Option", and assigned to the present assignee.

Once a high priority message is received at the pager, even when using a feature such as the priority override page, the high priority message is displayed, if the pager is equipped with a display, using the same technique used for a normal or non-priority message. Messages are retrieved by pressing the "Read" key on the pager and scrolling through the received messages that are stored in the pager's message buffer. Normally, once a message has been read, the message stored in the pager can be deleted in order to make room for new messages.

US 5258751 describes a selective call receiver that is capable of receiving messages and storing the messages for subsequent retrieval by a user, where the received messages can be prioritized.

US 5495517 describes a radio communication apparatus having a delayed announcement mode.

US 5247700 describes a pager and a paging service where the paging service is arranged to direct the pager to await for a page at a single frequency.

US 4860 247 describes a multi-window control system in which a common display terminal is assigned to a processor having a low priority and a processor having a high priority, where messages from the high priority processor is assigned preference to the common terminal.

US 5473 143 describes an ATM electronic mail system in which high priority messages are displayed automatically without requiring user intervention.

US 5870 682 describes a receiver that displays data having a predetermined display format in preference to other received data formats.

There is currently however no way to maintain the importance of a high priority message after an individual has recalled the stored message(s) from the pager's memory message buffer using the "READ" key (or some other pager control switch used for such functions). In situations where an important or high priority page is received and can't be acted upon by an individual for some time (e.g., a few hours) after the message has been read (e.g., individual is preoccupied with some important matter at the time, etc.), he may forget about the message over time. A need thus exists in the art for a method and apparatus which can provide an enhanced alert feature for users of communication devices such as pagers when a priority message is received.

### Brief Description of the Drawings

FIG. 1 shows a block diagram of a pager in accordance with the preferred embodiment of the invention.
FIG. 2 shows a front of a pager showing the pager's display and controls in accordance with the preferred embodiment of the invention.
FIG. 3 shows a prior art standby screen pager display.
FIG. 4 shows a persistent message display on a pager standby screen in accordance with the preferred embodiment of the invention.
FIG. 5 shows a continuation display screen of the persistent message shown in FIG. 4.
FIG. 6 shows a persistent message display on a typical function screen of a pager in accordance with the invention.
FIG. 7 shows an icon or display symbol which can be used in accordance with one of the preferred embodiments of the invention.

### Description of the Preferred Embodiment

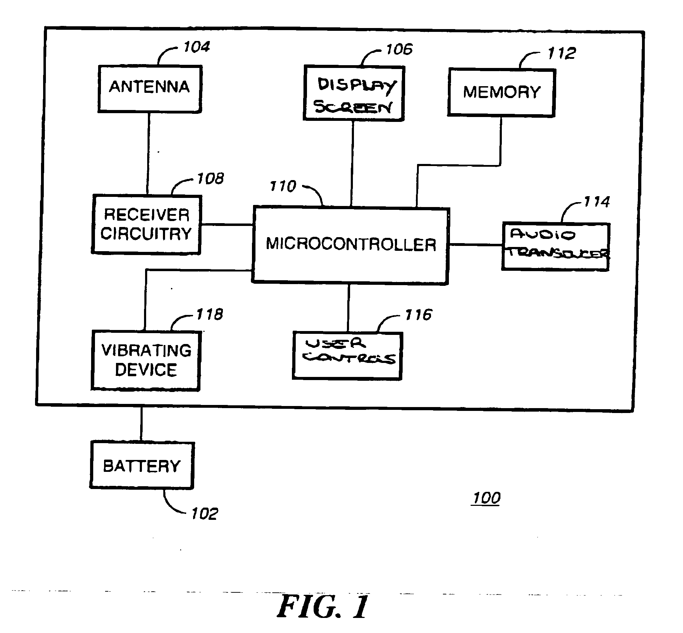

Referring now to the drawings and in particular to FIG. 1, a simplified block diagram of a selective call receiver 100 such as a pager in accordance with the invention is shown. Pager 100 includes a primary power supply 102 which can preferably take the form of a nonrechargeable battery, such an alkaline battery, or a rechargeable battery, such as a nickel-cadmium (NiCd) battery. Battery 102 provides power to all of the pager's circuitry. The pager 100 further comprises an antenna 104 that receives a radio frequency (RF) modulated selective call signal and provides the signal to a conventional receiver circuitry 108 for demodulation thereby. A microcontroller or microprocessor 110 processes the demodulated signal to decode an address and optional message data contain therein.

Once recovered, the message data may be stored in the memory or storage area 112 (message buffer) for subsequent presentation by an output device 106, such as a liquid crystal display 106 or an audio device, such as a liquid crystal display 106 or an alert mechanism. In normal operation, the pager's controller 110 compares a decoded address contained in the received signal with a predetermined addresses stored in memory to determine if the message is for that particular pager. The user is alerted by an alert mechanism that a message has been received if the decoded address correlates with one of the predetermined address or addresses. The alert mechanism typically takes the form of an audio transducer 114, etc. If the pager 100 is set to Silent mode, no audible alert will be given upon receipt of the message data unless a Priority Override Page is received as mentioned previously. Alternatively, the pager 100 can vibrate instead of sounding an audible alarm upon receipt of an incoming message if equipped with a vibrating device 118. If the received signal contains optional message data, the display 106 will present the message automatically on the display or when manually selected, by user actuated controls 116 which comprise switches, etc.

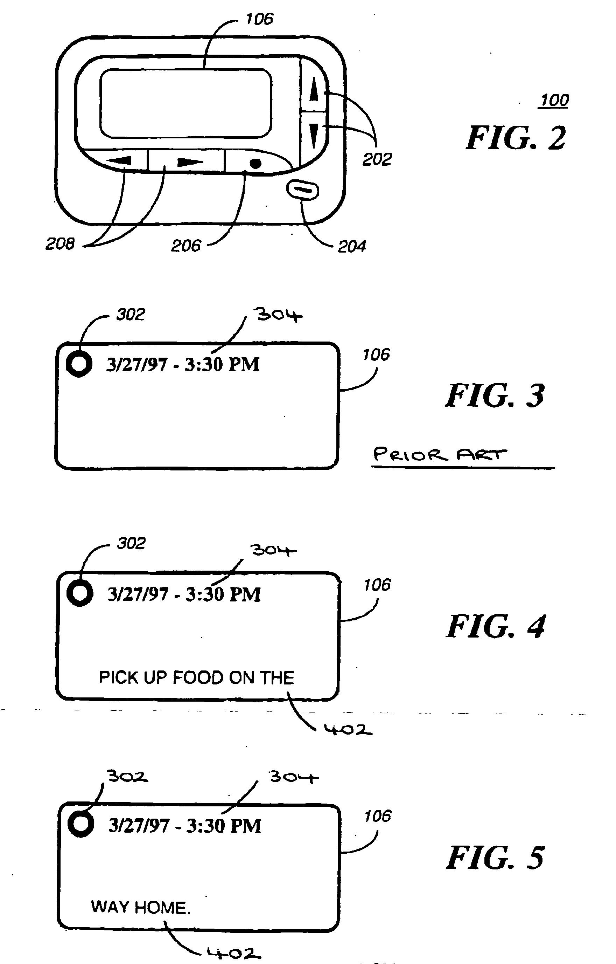

In FIG. 2, a front view of pager 100 is shown. In the particular pager shown, the user controls 116 include left/right directional buttons 208, up/down directional buttons 202, a read/reset/power on button 204, and a function/select button. The user controls 116 allows the pager user to set all of the pager's user selectable features and functions, and allows the user to review and delete the messages which have been received. Referring now to FIG. 3, a standard standby display for pager 100 is highlighted. LCD display screen 106 in the standard standby mode displays the time and date 304 and a "power on" icon 302.

Priority messages such as important or emergency messages which are received by the communication devices of the present invention can be transmitted using conventional methods for designating priority messages as known in the art. For example, in paging systems, a priority page may be sent using the previously mentioned Priority Override Page feature. The designation of the importance of the message can be attached to a transmitted message by the sender of the message using one of may techniques known in the art. For example, the importance of a message can be tagged by the sender of the message by calling a special phone number in order to send the page via the paging system, by performing a certain keypress sequence when entering the page via a telephone handset, by notifying the paging terminal operator entering the page into the paging system that the message is important so that it may be tagged accordingly, etc. That which determines whether a message is an emergency (priority) message or non-emergency message in one preferred implementation of the invention may be what is stored in the pager's code plug or read-only memory (ROM), which in pager 100, is located "on-chip" to microcontroller 110. As an example, a controller such as the MC68HCO5L16 manufactured by Motorola, Inc. includes 16 Kilobytes of user ROM and 512 bytes of RAM on board the microcontroller. The ROM may have several addresses, for example, 739-3444, may be reserved for priority messages, and two other addresses, for example, 739-3445 and 739-3446, may be reserved for non-priority messages. Besides using multi-addresses to determine which messages are priority messages and which are not, one could use one or more bits which are part of the incoming message (paging protocol) to notify the pager 100 that the message should be treated as a priority message, etc.

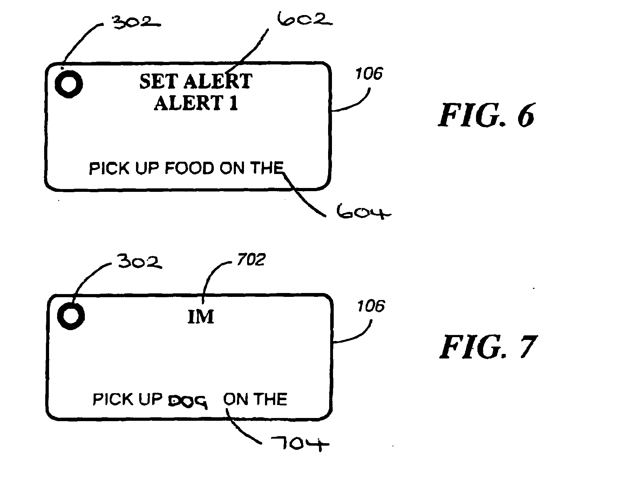

In accordance with the present invention once a message is decoded as an important or priority message by the pager, and read by the user, the message data will remain persistently on the display to remind the user of the message whenever he looks at his pager's display. As one example, on a pager with an eight line display, a portion of a received message or an entire page message designated as high priority may occupy the bottom line of the display at least periodically as shown in FIG. 4 until the message is deleted from the pager by the user. Preferably, the persistent page message 402 would be visible even when the remainder of the display screen is in standby mode as shown in FIG. 4, or when the display is used for other functions (e.g., setting the pager's real time-clock, selecting the pager's audio tone 602, etc.) as shown in FIG. 6. In FIG. 6, a persistent message is shown occurring during a function display screen which sets the alert functions on pager 100. Since the high priority message shown in FIG. 4 is too long to be displayed in one line, in FIG. 5, the remainder of the message as provided to the user is shown. A first portion and the remainder of the high priority message shown on the display screens in FIG. 4 and 5 respectively, are preferably shown in alternating fashion so the user can read the whole message. Alternatively, only the first portion of a message could be displayed as shown in FIG. 4 with the user being required to press a control switch to view the balance of the message.

On pagers with smaller display screens, or in cases where more "persistent" pages exist in the pager's memory than the pager's display area can handle, the persistent page messages 604, 704 would be preferably presented on the display screen on a rotating basis or in some other alternating fashion. Preferably, in the situation where the display can't handle the presentation of all of the important messages, each of the persistent messages would be displayed for a predetermined period of time, and so on, in a periodic fashion along with the pager's standby or other display screens, see FIG. 6 and 7. This would allow pagers with limited display resources, such as pagers with one line display screens, to still use the persistent display feature of the present invention.

On a pager having a one line display screen for example, the persistent page message could be alternated on the display with the time of day which is normally shown on the one line pager's standby screen. As a further enhancement to the present invention, a further type of notification can be given to the user that a persistent message is being displayed. As an example, a special icon or display symbol can be displayed on the screen which notifies the pager user that a persistent message is being displayed. This is particularly useful in the case of a one line display pager. In this particular case, some type of notification (e.g., icon) would be necessary to distinguish between a persistent message being displayed and a conventional reading from the pager's message buffer of a normal or non-priority message. In FIG. 7, an icon or display symbol "IM" 702 (which equates in this example to "Important Message") is used to alert the user that the message being displayed is an important message. In alternating display situations, as referred to previously above in which the priority message or a portion of the message can not be displayed on a full-time basis, icon 702 can be useful in letting the communication device user know that an important or priority message has been received.

Due to the limitations of pager's having smaller displays (e.g., one line display areas), the pager's user interface routine may need to temporarily override the persistent display of an important message as provided by the present invention during operations requiring the full display of the pager. For example, it may be preferable to only display the persistent message on the standby screen of the pager, and not when a user of a one line display pager is reading from the pager's message buffer other received messages (e.g., non-priority messages, etc.). As mentioned above, in this situation the icon 702 could be used to indicate the presence of a persistent page message when the display on a one line pager is being used to read other received messages.

In the present invention, high priority messages (e.g., important or emergency pages) sent to a communication device such as pager 100 will be persistently displayed in a designated area of the pager's display screen 106. This allows the user of a communication device such as a pager, cellular telephone, etc. a chance to recall an important message that may need to be acted upon latter in the day. By looking at the communication device's screen, which is typically done by most users several times during the day, the important message is easily remembered. As mentioned above, the term "persistently" as used in the present invention does not mean that the important message or a portion of the message is displayed at all times on the display. The important message may be displayed on a periodic basis as for example discussed above in association with one line display pagers, etc. Of course, if the communication device's display can accommodate one or more important message, these can be displayed on a continuous basis if so desired.

Preferably, the persistent display feature of the present invention can be turned on or off by the user of the communication device by activating a predetermined set of user controls 116. As for example done to set the pager's real-time clock or other pager features (e.g., alert tones, etc.). Alternatively, the persistent display feature can be set in ROM. The software algorithm required to perform the persistent message display feature of the present invention is preferably stored in the on-chip ROM found in controller 110. In other designs, the software algorithm can be stored in external storage areas as known in the art (e.g., external ROM, etc.).

While the preferred embodiments of the invention have been illustrated and described, it will be clear that changes, variations, substitutions and equivalents will occur to those skilled in the art without departing from the scope of the present invention as defined by the appended claims.

## Claims

1. A method for displaying messages on a display (106) of a communication device (100), comprising the steps of:
receiving a high priority message the high priority message having been pre-designated by a sender of the high priority message as a high priority message prior to being received by the communication device(100);
storing the high priority message in memory;
retrieving the high priority message from memory by activating a communication device control; and
displaying at least a portion of the high priority message on the communication device's display in a persistent manner after the high priority message has been retrieved from memory.

2. A method as defined in claim 1, further comprising the step of:
displaying a display symbol (icon) which indicates that a high priority message has been received after the high priority message has been received by the communication device.

3. A method as defined in claim 1, wherein the step of displaying comprises periodically displaying at least a portion of the high priority message on the communication's device display.

4. A method as defined in claim 1, further comprising the step of:
dividing the high priority message into a plurality of portions, and
wherein the step of displaying comprises repeatedly displaying each of the plurality of portions of the high priority message an alternating fashion so that the user can read the whole high priority message.

5. A method as defined in claim 1, further comprising the step of:
deleting the persistent displaying of the high priority message in response to the user deleting the high priority message.

## Patentansprüche

1. Verfahren zur Anzeige von Nachrichten auf einem Display (106) einer Kommunikationsvorrichtung (100), welches die folgenden Schritte umfasst:
Empfang einer Nachricht hoher Priorität, wobei die Nachricht hoher Priorität von einem Versender der Nachricht hoher Priorität als eine Nachricht hoher Priorität vorbestimmt wird, bevor sie von der Kommunikationsvorrichtung (100) empfangen wird;
Speichern der Nachricht hoher Priorität im Speicher;
Abrufen der Nachricht hoher Priorität aus dem Speicher durch Aktivieren einer Kommunikationsvorrichtungssteuerung; und
Anzeigen von mindestens einem Teil der Nachricht hoher Priorität auf dem Display der Kommunikationsvorrichtung auf beständige Art und Weise, nachdem die Nachricht hoher Priorität vom Speicher abgerufen wird.

2. Verfahren nach Anspruch 1, welches des Weiteren den folgenden Schritt umfasst:
Anzeigen eines Display-Symbols bzw. Icons, welches angibt, dass eine Nachricht hoher Priorität empfangen wurde, nachdem die Nachricht hoher Priorität von der Kommunikationsvorrichtung empfangen wurde.

3. Verfahren nach Anspruch 1, **dadurch gekennzeichnet, dass** der Schritt des Anzeigens das periodische Anzeigen von mindestens einem Teil der Nachricht hoher Priorität auf dem Display der Kommunikationsvorrichtung umfasst.

4. Verfahren nach Anspruch 1, welches des Weiteren den folgenden Schritt umfasst:
Aufteilen der Nachricht hoher Priorität in eine Vielzahl von Teilen, und
**dadurch gekennzeichnet, dass** der Schritt des Anzeigens das wiederholte Anzeigen von jedem der Vielzahl von Teilen der Nachricht hoher Priorität auf alternierende Art und Weise umfasst, so dass der Benutzer die gesamte Nachricht hoher Priorität lesen kann.

5. Verfahren nach Anspruch 1, welches des Weiteren den folgenden Schritt umfasst:
Löschen des beständigen Anzeigens der Nachricht hoher Priorität ansprechend darauf, dass der Benutzer die Nachricht hoher Priorität löscht.

## Revendications

1. Procédé pour afficher des messages sur un affichage (106) d'un dispositif de communication (100), comprenant les étapes consistant à:
recevoir un message de priorité élevée, le message de priorité élevée ayant été prédésigné par un expéditeur du message de priorité élevée en tant que message de priorité élevée avant d'être reçu par le dispositif de communication (100);
stocker le message de priorité élevée dans une mémoire;
récupérer le message de priorité élevée de la mémoire en activant une commande de dispositif de communication; et
afficher au moins une portion du message de priorité élevée sur l'affichage du dispositif de communication de manière permanente après que le message de priorité élevée a été récupéré de la mémoire.

2. Procédé selon la revendication 1, comprenant en outre l'étape consistant à:
afficher un symbole d'affichage (icône) qui indique qu'un message de priorité élevée a été reçu après que le message de priorité élevée a été reçu par le dispositif de communication.

3. Procédé selon la revendication 1, dans lequel l'étape d'affichage comprend l'affichage périodique d'au moins une portion du message de priorité élevée sur l'affichage du dispositif de communication.

4. Procédé selon la revendication 1, comprenant en outre l'étape consistant à:
diviser le message de priorité élevée en une pluralité de portions, et
dans lequel l'étape d'affichage comprend l'affichage répété de chacune de la pluralité de portions du message de priorité élevée de manière alternée de sorte que l'utilisateur peut lire la totalité du message de priorité élevée.

5. Procédé selon la revendication 1, comprenant en outre l'étape consistant à:
supprimer l'affichage permanent du message de priorité élevée en réponse à la suppression du message de priorité élevée par l'utilisateur.
